# EUROPÄISCHE PATENTSCHRIFT

(11) **EP 0 501 245 B1**
(45) Veröffentlichungstag und Bekanntmachung des Hinweises auf die Patenterteilung: **09.10.1996**
(21) Anmeldenummer: 92102432.9
(22) Anmeldetag: 13.02.1992
(51) Int. Cl.: G06K 19/073, G06K 7/00

(54) **Verfahren zur Datenübertragung von einer stationären Einheit zu einer einen Datenspeicher und einen zugehörigen Schutzspeicher aufweisenden beweglichen Einheit**
Method for data transmission from a stationary unit to a movable unit comprising a data memory and its protection memory
Méthode de transmission de données à partir d'une unité stationnaire à une unité mobile comportant une mémoire de données et sa mémoire de protection

(30) Priorität: 28.02.1991 DE 4106456
(43) Veröffentlichungstag der Anmeldung: 02.09.1992
(73) Patentinhaber: SIEMENS AKTIENGESELLSCHAFT, 80333 München (DE)
(72) Erfinder: Schrenk, Hartmut, Dr. rer. nat., W-8013 Haar (DE)

(56) Entgegenhaltungen:
- DE-A- 3 447 560
- FR-A- 2 311 365
- PATENT ABSTRACTS OF JAPAN vol. 12, no. 173 (P-706)24. Mai 1988 & JP-A-62 282 367
- PATENT ABSTRACTS OF JAPAN vol. 14, no. 482 (P-1119)19. Oktober 1990 & JP-A-21 95 376
- PATENT ABSTRACTS OF JAPAN vol. 14, no. 230 (P-1048)16. Mai 1990 & JP-A-20 54 387

## Beschreibung

Die Erfindung betrifft ein Verfahren zur Datenübertragung von einer stationären Einheit zu einer einen Datenspeicher und einen zugehörigen Schutzspeicher aufweisenden beweglichen Einheit.

Ein derartiges Verfahren wird insbesondere bei Zugangssystemen oder bei Abbuchungssystemen und dergleichen insbesondere in Chipschlüsseln und Chipkarten mit kontaktloser oder kontaktaufweisender Datenübertragung verwendet. Die Systeme bestehen aus einer stationären und einer beweglichen Einheit. Die stationäre Einheit ist zumeist ein Schreib/Lesegerät welches Daten im beweglichen Teil lesen und auf dieses schreiben kann. Erfolgt die Datenübertragung kontaktlos und weist der bewegliche Teil keine eigene Stromversorgung auf, so muß die Energie ebenfalls von der stationären Einheit an die bewegliche Einheit übertragen werden. Dies erfolgt z. B. über ein Spulenpaar. Ein derartiges System ist z. B. aus der DE-C2-34 47 560 und der darin zitierten Schrift bekannt.

Wird in einem derartigen System der bewegliche Teil mit einem Sicherheitsspeicher ausgestattet, so teilt sich der darin enthaltene Speicher in zwei Bereiche auf. Der erste Bereich enthält den Datenspeicher und der zweite Teil den zugehörigen Schutzspeicher. Jeder Speicherzelle im Datenspeicher ist dabei wenigstens ein Schutzbit des Schutzspeichers zugeordnet. Weist z. B. eine Datenspeicherzelle eine Breite von 8 Bit auf, so beträgt die Größe des Schutzspeichers 1/8 des Datenspeichers. Wird eine Information vom Schreib/Lesegerät (stationäre Einheit) in die bewegliche Einheit übertragen und soll diese gesichert werden, so wird das entsprechende Datenwort mittels eines Schreibbefehls an die bewegliche Einheit übertragen. Die bewegliche Einheit speichert das entsprechende Datenwort ab und setzt nach erfolgreichem Schreiben das Schutzbit, wodurch die geschriebene Information gesichert wird. Ist das Schutzbit für eine Datenspeicherzelle gesetzt, so ist es nur noch möglich, diese vom Schreib/Lesegerät zu lesen. Ein Verändern einer Datenspeicherzelle, deren zugehöriges Schutzbit gesetzt ist, ist fortan unmöglich.

Obenstehendes ist ein Beispiel für die Zuordnung Daten- zu Schutzspeicher. Es sind natürlich auch andere Zuordnungen möglich, z. B. ist ein größere Datenblock im Speicher mit einem Schutzbit oder einer Schutzkombination abzusichern und ein ganzes Blockprotokoll in den Datenvergleich einzubeziehen.

Sollte beim Übertragen des Datenworts ein Fehler auftreten, was bei Dateneingabe der Datenübertragung oder bei fehlerhafter Dateneingabe vorkommen kann, so wird die Speicherzelle mit einem fehlerbehafteten Datenwort beschrieben. Wenn mit dem gleichen Befehl gleichzeitig das Schutzbit gesetzt wird, ist ein Korrigieren unmöglich. In den meisten Fällen ist die bewegliche Einheit dann unbrauchbar, da eine Korrektur nicht mehr möglich ist.

Die JP-A-88 0206089 offenbart ein Kartenlese/Schreibgerät und eine Chipkarte, zwischen denen ein Datenaustausch stattfinden soll. Hierbei wird die Kontinuität, das heißt die Richtigkeit der übertragenen Datenwörter überprüft.

Aufgabe der Erfindung ist es daher, ein Verfahren zur Datenübertragung von einer stationären Einheit zu einer einen Datenspeicher und einen zugehörigen Schutzspeicher aufweisenden beweglichen Einheit anzugeben, die ein sicheres Übertragen von Daten ermöglicht und ein versehentliches Setzen des Schutzbits verhindert.

Die Aufgabe wird durch die Merkmale der Ansprüche 1 bzw. 2 gelöst. Weiterbildungen des Verfahrens sind Kennzeichen des Unteranspruchs.

Die Erfindung wird nachfolgend anhand einer Figur näher erläutert.

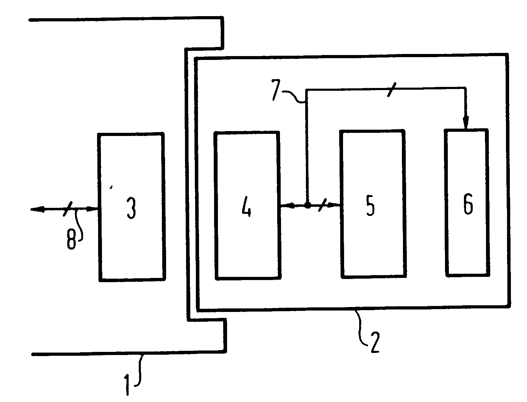

Die Figur zeigt eine stationäre Einheit 1, die z. B. ein Schreib/Lesegerät sein kann. Die stationäre Einheit 1 enthält eine Funktionseinheit 3 zum Übertragen von Daten und Energie. Die Funktionseinheit 3 ist über einen Bus 8 mit weiteren Funktionseinheiten, z. B. Mikroprozessor, Speicher usw., welche nicht näher dargestellt sind, verbunden. Weiterhin ist eine bewegliche Einheit 2 dargestellt. Sie enthält ebenfalls eine Funktionseinheit 4 zum Empfangen von Energie und zum Übertragen und Empfangen von Daten. Die Funktionseinheit 4 ist ebenfalls über einen Bus 7 zum einen mit einem Datenspeicher 5 und zum anderen mit einem Schutzbitspeicher 6 verbunden. Jedem Datenbyte im Datenspeicher 5 ist dabei 1 Bit des Schutzspeichers 6 zugeordnet. Enthält der Datenspeicher 5 z. B. 8196 Datenbits und besteht jedes Datenbyte des Datenspeichers aus 8 Bit so enthält der Schutzspeicher 1024 Datenbits.

Ist ein Datenbit im Schutzspeicher gesetzt, so ist das zugehörige Datenbyte im Datenspeicher von der stationären Einheit 1 nur noch lesbar. Nach Setzen dieses Schutzbits ist ein erneutes Schreiben bzw. Uberschreiben des entsprechenden Datenbytes unmöglich.

Erfindungsgemäß erfolgt nun die Datenübertragung derart, daß zur Datenübertragung ein spezieller Befehlssatz vorhanden ist. Dieser Befehlssatz ermöglicht es Datenspeicher und Schutzbitspeicher getrennt zu beschreiben.

In einer ersten Ausführungsform des Verfahrens kann z. B. ein erster Befehl vorgesehen sein, der es ermöglicht mittels einer ebenfalls übertragenen Adresse eine adressierte Speicherzelle im Datenspeicher zu beschreiben. Mit einem zweiten sogenannten "Verify"-Befehl mit dem ebenfalls das zuvor geschriebene Datenwort und zugehörige Adresse an die bewegliche Einheit übertragen wird, vergleicht nun die Funktionseinheit 4 das zuvor in die adressierte Speicherzelle geschriebene Datenwort mit dem im "Verify"-Befehl enthaltenen Datenwort. Stimmt geschriebenes und gelesenes Datenwort überein, so wird nun das Schutzbit gesetzt. Andernfalls erfolgt eine Rückmeldung an die stationäre Einheit und es kann z. B. ein erneuter Schreibversuch des Datenworts in den Datenspeicher erfolgen.

Eine zweite Ausführungsform des Verfahrens enthält ebenfalls einen ersten Befehl zum Schreiben eines Datenworts in eine adressierte Speicherzelle im Datenspeicher und einen zweiten Befehl zum Setzen des zugehörigen Schutzbits. Zuerst wird mittels des ersten Befehls das zu schreibende Datenwort und die zugehörige Adresse an die bewegliche Einheit übertragen und nachfolgend die soeben beschriebene Adresse durch einen Lesebefehl gelesen. Die stationäre Einheit vergleicht nun das geschriebene und das gelesene Datenwort miteinander und bei Übereinstimmung wird mittels des zweiten Schreibbefehls das Schutzbit im Schutzspeicher gesetzt.

Beide Verfahren ermöglichen ein sicheres Setzen des Schutzbits sobald die übertragene Information richtig abgespeichert wurde.

Ein versehentliches Beschreiben einer Speicherzelle mit einer ungültigen Information und ein Setzen des zugehörigen Schutzbits wird praktisch ausgeschlossen.

Das Verfahren eignet sich inbesondere bei sogenannten Chipkarten oder Chipschlüssel in Zugangssystemen bzw. Abbuchungssystemen jeder Art. Besonders eignet es sich bei Systemen, bei denen die Datenübertragung in elektrisch stark gestörter Umgebung erfolgt.

## Patentansprüche

1. Verfahren zur Datenübertragung von einer stationären Einheit (1) zu einer einen Datenspeicher (5) und einen zugehörigen Schutzspeicher (6) aufweisenden beweglichen Einheit (2), wobei ein Datenwort im Datenspeicher (5) durch ein Schutzbit gegen Überschreiben irreversibel geschützt werden kann, **dadurch gekennzeichnet**, daß
• ein zu schützendes Datenwort in den Datenspeicher (5) übertragen wird,
• daraufhin durch einen Vergleichsbefehl die bewegliche Einheit (2) das zuvor geschriebene Datenwort mit dem im Vergleichsbefehl enthaltenen Vergleichswort vergleicht und bei Übereinstimmung das zugehörige Schutzbit setzt.

2. Verfahren zur Datenübertragung von einer stationären Einheit (1) zu einer einen Datenspeicher (5) und einen zugehörigen Schutzspeicher (6) aufweisenden beweglichen Einheit (2), wobei ein Datenwort im Datenspeicher (5) durch ein Schutzbit gegen Überschreiben irreversibel geschützt werden kann, **dadurch gekennzeichnet**, daß
• ein zu schützendes Datenwort in den Datenspeicher (5) übertragen wird,
• daraufhin das soeben geschriebene Datenwort von der stationären Einheit (1) ausgelesen wird,
• das gelesene und das geschriebene Datenwort von der stationären Einheit (1) miteinander verglichen werden,
• bei Übereinstimmung des gelesenen und des geschriebenen Datenworts ein Schreibbefehl zum Setzen des Schutzbits übertragen wird.

3. Verfahren zur Datenübertragung nach einem der vorhergehenden Ansprüche, **dadurch gekennzeichnet**,
daß die bewegliche Einheit (2) eine Chipkarte oder ein Chipschlüssel ist.

## Revendications

1. Procédé de transmission de données d'une unité fixe (1) à une unité mobile (2) comportant une mémoire de données (5) et une mémoire de protection (6) associée, un mot de données dans la mémoire de données (5) pouvant être protégé de manière irréversible contre un recouvrement par un bit de protection, **caractérisé par le fait que**
• on transmet à la mémoire de données (5) un mot de données à protéger,
• l'unité mobile (2) compare ensuite par une instruction de comparaison le mot de données précédemment écrit au mot de comparaison contenu dans l'instruction de comparaison et elle positionne le bit de protection associé en cas de concordance.

2. Procédé de transmission de données d'une unité fixe (1) à une unité mobile (2) comportant une mémoire de données (5) et une mémoire de protection (6) associée, un mot de données dans la mémoire de données (5) pouvant être protégé de manière irréversible contre un recouvrement par un bit de protection, **caractérisé par le fait que**
• on transmet à la mémoire de données (5) un mot de données à protéger,
• puis l'unité fixe (1) lit le mot de données qui vient d'être écrit,
• l'unité fixe (1) compare entre eux le mot de données lu et le mot de données écrit,
• lorsque le mot de données lu et le mot de données écrit concordent, on transmet une instruction d'écriture pour le positionnement du bit de protection.

3. Procédé de transmission de données selon l'une des revendications précédentes, **caractérisé par le fait que**
l'unité mobile (2) est une carte à puce ou une clé à puce.

## Claims

1. Method for data transmission from a stationary unit (1) to a movable unit (2) comprising a data memory (5) and an associated protection memory (6), it being possible for a data word in the data memory (5) to be irreversibly protected against overwriting by a protection bit, characterized in that
• a data word to be protected is transferred into the data memory (5),
• then, by a comparison command, the movable unit (2) compares the previously written data word with the comparison word contained in the comparison command and, if they match, set the associated protection bit.

2. Method for data transmission from a stationary unit (1) to a movable unit (2) comprising a data memory (5) and an associated protection memory (6), it being possible for a data word in the data memory (5) to be irreversibly protected against overwriting by a protection bit, characterized in that
• a data word to be protected is transferred into the data memory (5),
• then, the data word just written is read out from the stationary unit (1),
• the read data word and the written data word are compared with each other by the stationary unit (1),
• if the read data word and the written data word match, a write command is transmitted for setting the protection bit.

3. Method for data transmission according to one of the preceding claims, characterized in that the movable unit (2) is a chip card or a chip key.
